Europäisches Patentamt

European Patent Office

Office européen des brevets

(11) Publication number: 0 427 353 A2

# EUROPEAN PATENT APPLICATION

(21) Application number: 90203045.1

(51) Int. Cl.⁵: A01D 34/66

(22) Date of filing: 30.03.87

This application was filed on 16 - 11 - 1990 as a divisional application to the application mentioned under INID code 60.

(30) Priority: 31.03.86 US 846655

(43) Date of publication of application:
15.05.91 Bulletin 91/20

(60) Publication number of the earlier application in accordance with Art.76 EPC: 0 240 084

(84) Designated Contracting States:
DE FR GB

(71) Applicant: FORD NEW HOLLAND INC.
500 Diller Avenue P.O. Box 1895
New Holland Pennsylvania 17557-0903(US)

(72) Inventor: Koch, Earl E.
Route 2
Mohnton, PA 19540(US)
Inventor: Voler, Franja F.
395 Valley View Drive
New Holland, PA 17557(US)
Inventor: Howell, Edmund O.
Route 3
New Holland, PA 17557(US)

(74) Representative: Vandenbroucke, Alberic T.J.
FORD NEW HOLLAND N.V. Leon Claeysstraat 3A
B-8210 Zedelgem(BE)

(54) Disc cutter rotor assembly.

(57) An improved disc cutter rotor assembly (25) for use in a disc cuttebar (20) of the type utilizing a plurality of intermeshed gears (30) to transfer rotational power is disclosed. This rotor assembly (25) provides a lower profile to facilitate the flow of crop material over the cutterbar (20) and yet also permits the individual components of the rotor assembly (25) to be serviced and/or replaced. The hub (62) and shaft (60) are of welded construction and are rotatably mounted via a removable bearing assembly (57) within a bearing housing (55) affixed to the transmission casing (35). The drive gear (32) for the rotor assembly (25) is splined onto the shaft (60) and retained in place by a fastener and washer assembly (65) to permit the drive gear (32) to be removed from the shaft (60). A sealed hole (67) in the bottom (38) of the transmission casing (35) permits access to the fastener and washer assembly (65) to permit the drive gear (32) to be removed from the shaft (60) before removing the rotor assembly (25) from the transmission casing (35).

Fig. 7

EP 0 427 353 A2

## DISC CUTTER ROTOR ASSEMBLY

The present invention relates to a disc cutterbar of the type utilizing intermeshing gears for the transmission of rotary power and which comprises improved disc cutter rotary assemblies.

Disc cutterbars of the type utilizing a plurality of intermeshed gears to transfer rotational power through the transmission casing to the rotatably mounted disc cutter units typically are provided with a pair of idler gears rotatably mounted within the transmission casing between each pair of adjacent disc cutter assemblies. The purpose of this transmission gear configuration is to provide opposing directions of rotation for adjacent disc cutter units.

Because of the precise nature of the intermeshed transmission gears in such disc cutterbars, the location of the idler gear mounting is particularly critical. Furthermore, due to the forces imposed on the idler gear mountings deformation problems are also encountered. With the current tendency to manufacture cutterbars with a low, thin profile to keep the cutting member close to the surface of the ground and minimize impedance to the flow of severed crop material over the surface of the disc cutters, a substantial mounting of the idler gears to maintain proper centers and alignment is required.

Accordingly it is the object of the present invention to provide a substantial gear mounting apparatus in a thin profile transmission casing which enables proper maintaining of the manufacturing centers and alignment of the gears in the power transmission train; even when, in operation, high forces are imposed on the various components and which further also maintains ease of serviceability.

A cutterbar construction with a low, compact drive profile so that the flow of severed crop material is not impeded over the surface of the cutterbar, can be found in U.S. Patent no. 4.365.462. While this particular disc cutterbar configuration provides the compact profile, each disc cutter rotor assembly thereof is a captive unit whose individual components are neither serviceable nor removable from the assembly without causing damage to the other components.

Accordingly it also is a further object of the present invention to provide a low, compact cutterbar profile while retaining the serviceability aspects of the individual components of the disc cutter rotor assemblies.

According to the invention, a disc cutterbar for severing standing crop material from the ground is provided and which has a plurality of disc cutter assemblies detachably mounted to an upper surface portion of a transmission casing :

said upper surface portion having an opening therein corresponding to each disc cutter assembly;
- said transmission casing further also comprising a lower surface portion spaced below the upper surface portion and housing a power transmission gear train including at least one idler gear positioned between adjacent disc cutter assemblies; and
- each said disc cutter assembly comprising :
    a) a bearing housing detachably connectable to the upper surface portion of the transmission casing and having a size sufficient to cover the opening corresponding to said disc cutter assembly; said bearing housing mounting a bearing assembly having an outer race and an inner race;
    b) a shaft member engaged with the inner race of the bearing assembly and extending through the bearing housing; said shaft member being rotatable relative to the bearing housing;
    c) a hub affixed to the shaft member and rotatable therewith above the bearing housing;
    d) a cutter disc detachably mounted on said hub for rotation therewith; said cutter disc carrying at least one knife to engage and sever standing crop material upon rotation of said cutter disc; and
    e) a drive gear connected to the shaft member and positioned within the transmission casing between the upper and lower surface portions thereof; said drive gear forming part of said power transmission gear train and being operatively interengaged with idler gears of said power transmission gear train to effect rotating of the shaft member,
    said disc cutterbar being characterized in that :
    - the outer race of the bearing assembly is removably engaged with the bearing housing;
    - the shaft member is detachably engaged with the inner race of the bearing assembly; and
    the drive gear is detachably connected to the shaft member.

Preferably the hub and shaft members are of welded construction and are detachably and rotatably mounted within the respective bearing housings via said removable bearing assemblies. The drive gear for each disc cutter assembly preferably is splined onto the corresponding shaft member and is retained in place by a fastener and washer assembly to permit this drive gear to be removed from said shaft member. Sealed holes in the bottom of the transmission casing permit access to the respective fastener and washer assemblies to permit the drive gears to be removed from the shaft members before removing the respective disc cutter assemblies from the transmission casing.

Thus, according to the present invention, a disc cutterbar construction with a low profile is provided which facilitates the flow of crop material over the cutterbar and yet permits the individual components of the rotor assemblies to be serviced and/or replaced as needed without damaging the remaining components of these assemblies. It is a feature of this invention that the drive gear can be disconnected from each respective disc cutter rotor assembly before said assembly is removed from the disc cutterbar. It is another feature of this invention that the bearing assembly for each respective disc cutter rotor assembly can be replaced without requiring replacement of the drive gear and other structural components of said rotor assembly. Accordingly, the present invention thus provides a disc cutter rotor assembly for use in a low profile disc cutterbar which is durable in construction, inexpensive of manufacture, carefree of maintenance, facile in assemblage and simple and effective in use.

The advantages of this invention will become apparent upon consideration of the following detailed disclosure of the invention, especially when taken in conjunction with the accompanying drawings, wherein:

Fig. 1 is a top plan view of a disc mower-conditioner incorporating the principles of the instant invention;

Fig. 2 is a left side elevational view of the disc mower-conditioner seen in Fig. 1;

Fig. 3 is a view of the disc cutterbar as seen along lines 3-3 of Fig. 2, with the extraneous harvester structure removed;

Fig. 4 is a top plan view of the disc cutterbar seen in Fig. 3;

Fig. 5 is an enlarged partial cross-sectional view of the disc cutterbar taken along lines 5-5 of Fig. 4;

Fig. 6 is an enlarged cross-sectional view of the cutterbar taken along lines 6-6 of Fig. 5 to show the structural details of the idler gear mounting apparatus; and

Fig. 7 is an enlarged partial cross-sectional view of the disc cutterbar taken along lines 7-7 of Fig. 5 to show the structural details of the disc cutter rotor assembly.

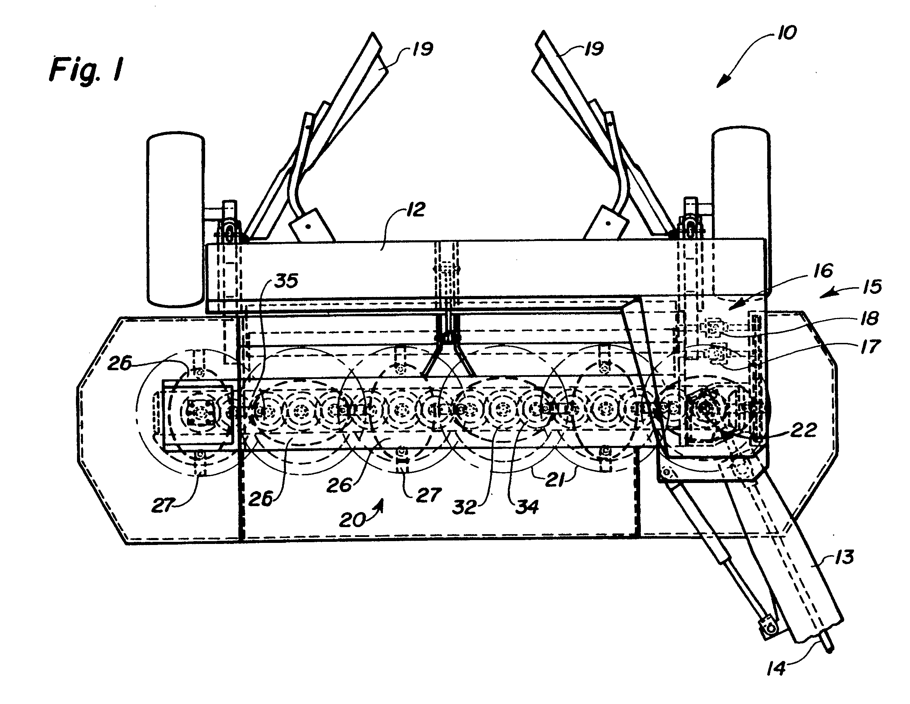

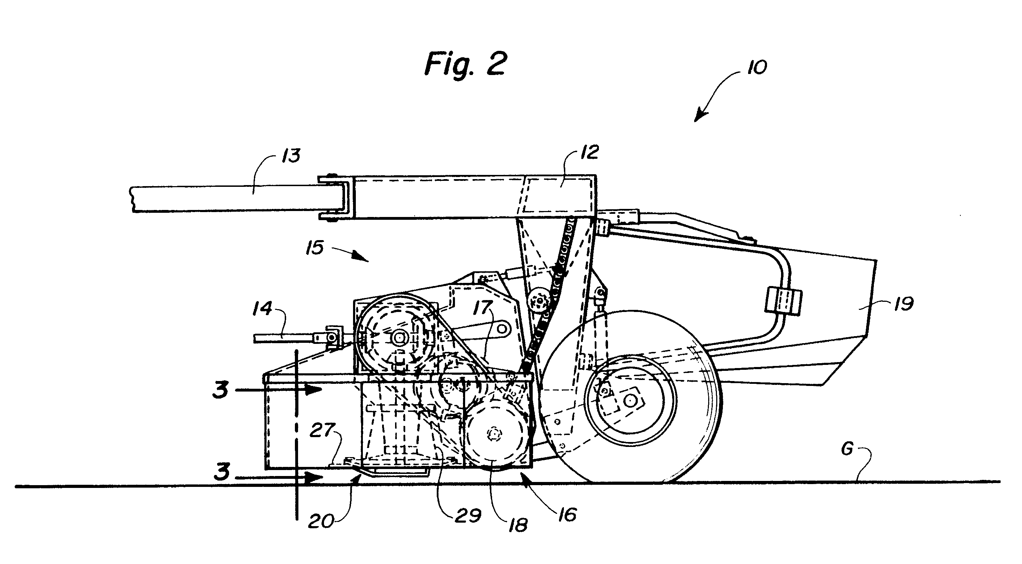

Referring now to the drawings and, particularly, to Fig. 1, a top plan view of a crop harvesting machine, commonly referred to as a disc mower-conditioner, incorporating the principles of the instant invention, can be seen. Any left and right references are used as a matter of convenience and are determined by standing at the rear of the machine and facing in the direction of operative travel. As best seen in Figs. 1 and 2, the disc mower-conditioner 10 is supported over the ground G by a wheeled frame 12. The embodiment as shown in the drawings is commonly referred to as a pull-type machine and, therefore, is equipped with a draft tongue 13 and a PTO driveline 14 to input rotational power from a pulling tractor (not shown).

The machine 10 is provided with a header 15 floatingly supported from the frame 12 in a conventional manner. The header 15 is provided with a disc cutterbar 20, described in further detail below, and a conditioning mechanism 16, including an upper roll 17 and a lower roll 18, positioned immediately rearwardly of the cutterbar 20 to receive and condition severed crop. Conditioned crop material which is discharged from the conditioning mechanism 16 is engaged with the rearwardly converging baffle shields 19 that deposit this conditioned crop into a consolidated windrow upon the ground G in a conventional manner.

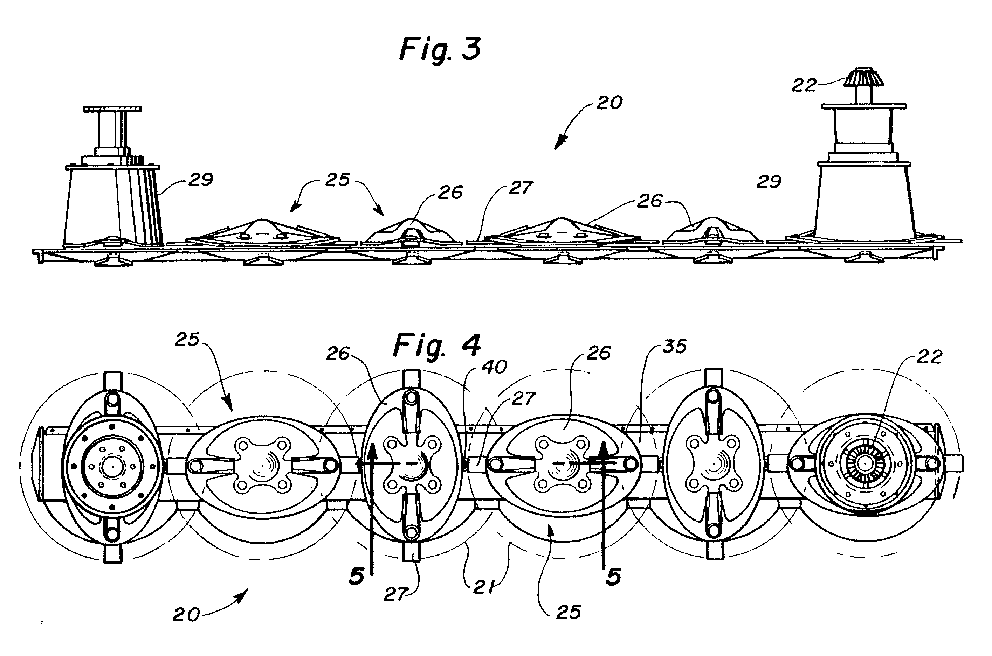

An overall view of the disc cutterbar 20 is best seen in Figs. 3 and 4. The power input shaft 22 receives rotational power from the PTO driveline 14 and transfers the rotational power through a series of intermeshing power transmission gears described in greater detail below and rotatably powers the operation of the disc cutter assemblies 25, each of which has a pair of outwardly extending knives 27 that engage the standing crop material and, by rotation along a circular arc exhibited by the arc 21, affect a severing thereof from the ground. The disc cutter assemblies 25 at the respective ends of the cutterbar 20 are provided with a hat-shaped divider drum 29 to facilitate the flow of crop material over the cutterbar 20 and inwardly toward the conditioning mechanism 16.

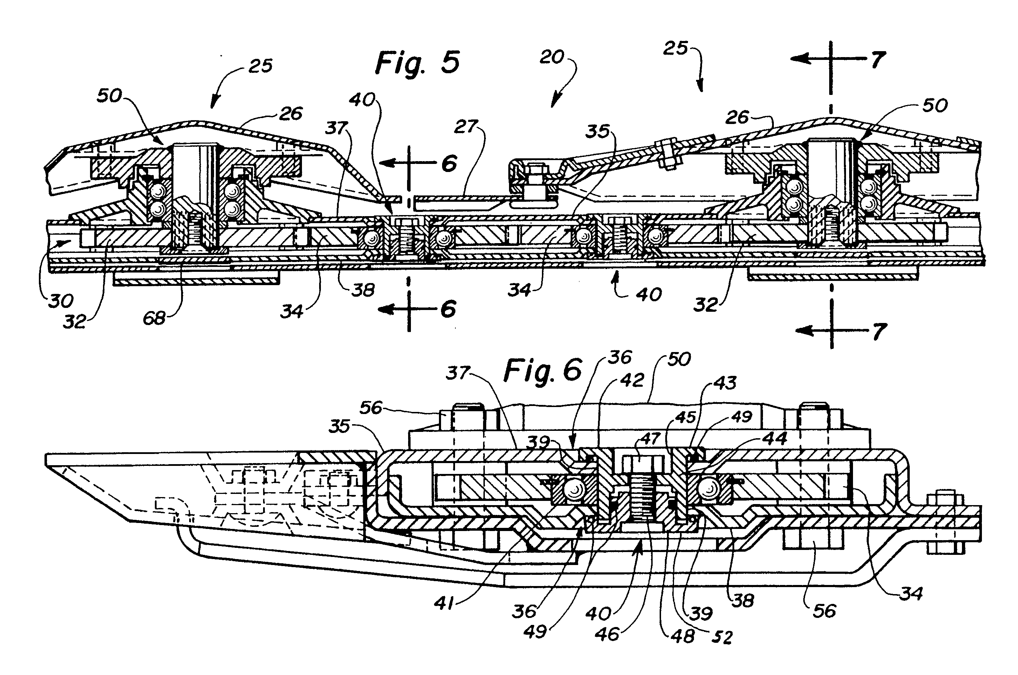

Referring now to Figs. 3-7, particularly to Fig. 5, the structural details of the power transmission train 30 and the disc cutterbar 20 can best be seen. Each disc cutter assembly 25 is provided with a detachably connected cutter disc 26 which carries the knives 27 for engagement with the standing crop material. The power input shaft 22 delivers rotational power to a power tranmission train 30, including a drive gear 32 associated with each respective disc cutter assembly 25 and a pair of idler gears 34 mounted between adjacent drive gears 32. The provision of two idler gears 34 between adjacent drive gears 32 permits the adjacent disc cutter assemblies 25 to be rotated in opposing directions.

Referring now to Figs. 5 and 6, the idler gear mounting apparatus 40 can best be seen. The transmission casing 35 is formed with an indentation 36 in both the upper surface portion 37 and the lower surface portion 38 through which the mounting hole 39 passes. Each idler gear 34 is rotatably mounted on the apparatus 40 by a bearing assembly 41. The mounting apparatus 40 includes a spacer member 42 having a lip portion 43 and a shank portion 44 defining a recessed portion 45. The spacer member 42 extends completely through the the mounting hole 39 in the transmission casing 35 and engages both the upper surface portion 37 and the lower surface portion 38 along its shank portion 44 to provide radial support for the spacer member 42 and thus the mounting apparatus 40. The inner race of the bearing assembly 41 is mounted on the shank portion 44 of the spacer member 42 between the upper surface portion 37 and the lower surface portion 38.

To fix the mounting apparatus 40 in place on the transmission casing 35, a bolt 46 passes through the spacer member 42 such that the head portion 47 of the bolt 46 is received within the recessed portion 45 of the spacer member 42. A specially formed securing member 48 including a lip portion 52 for engagement with the lower surface portion 38 of the casing 35, is threadably engaged with the bolt 46 to tightly draw the mounting apparatus 40 together. The securing member 48 engages the lower surface portion 38 of the transmission casing 35 while that the lip portion 43 of the spacer member 42 engages the upper surface portion 37 of the transmission casing 35 to permit the mounting apparatus 40 to squeeze the casing 35 against the bearing assembly 41. The special shape of the securing member 48 fits within the shank portion 44 of the spacer member 42 and extends outwardly thereof to engage with its lip portion 52 the lower surface portion 38 of the casing 35. O-rings 49 positioned between the lip portion 43 and the upper surface portion 37, as well as between the securing member 48 and the lower surface portion 38 and between the securing member 48 and the shank portion 44 seal the idler gear mounting apparatus 40 against the transmission casing 35 to prevent the loss of lubricating fluid from within the casing 35.

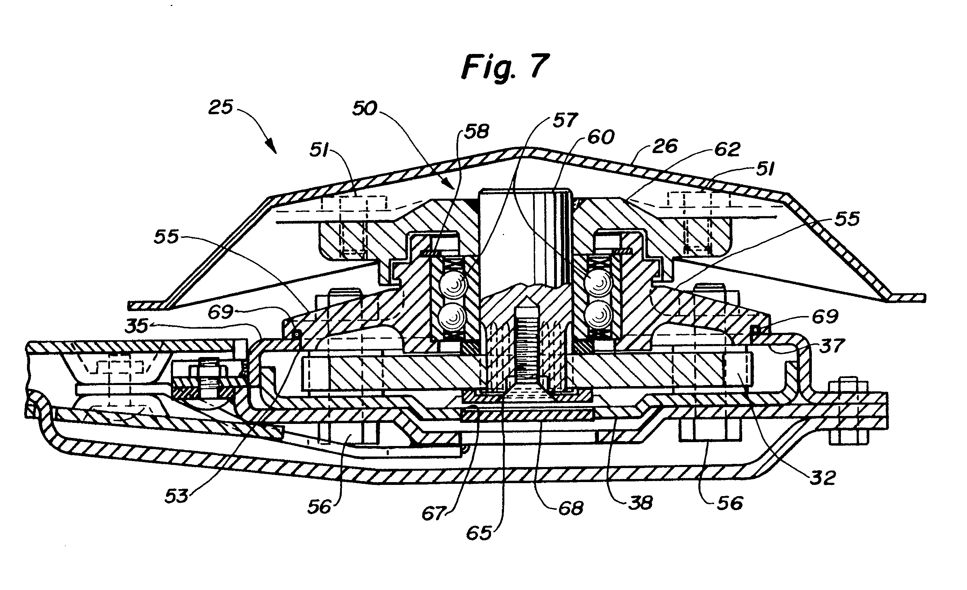

Referring now to Figs. 5 and 7, the structural configuration of the disc cutter assembly 25 can best be seen. The disc cutter members 26 are detachably mounted to a rotor assembly 50 by fasteners 51. The upper surface portion 37 of the transmission casing 35 is provided with an access opening 53 through which the rotor assembly 50 extends into the casing 35. The rotor assembly 50 includes a bearing housing 55 detachably mounted on the upper surface portion 37 of the casing 35 by a plurality of bolts 56 extending entirely through the transmission casing 35 and engaging the lower surface portion 38. The bearing housing 55 mounts a bearing assembly 57 which is removably secured by a snap ring 58 to retain the bearing assembly 57 in place with respect to the housing 55.

The bearing assembly 57 rotatably mounts a shaft member 60 for rotation relative to the bearing housing 55. The shaft member 60 projects both above and below the bearing housing 55. A hub 62 is welded to the top of the shaft member 60 for rotation therewith above the bearing housing 55. The disc member 26 is connected to the hub 62 by the aforementioned fasteners 51. The drive gear 32 for the disc cutter assembly 25 is splined onto the bottom of the shaft member 60 and positioned within the transmission casing 35 for intermeshed engagement with the adjoining idler transmission gears 34. The drive gear 32 is secured to the shaft member 60 by a fastener and washer assembly 65 which is threaded into the shaft member 60.

The lower surface portion 38 of the transmission casing 35 is provided with a hole 67 therein to gain access to the fastener and washer assembly 65 to permit a disconnection of the drive gear 32 from the shaft member 60 without removing the rotor assembly 50 from the transmission casing 35. The hole 67 is sealed with a seal 68 to maintain the fluid tight integrity of the transmission casing 35. An O-ring seal 69 is positioned between the bearing housing 55 and the upper surface portion 37 of the casing 35 to seal the access opening 53 and prevent leakage therefrom.

The component parts of the rotor assembly 50 can be assembled in the following manner. The bearing assembly 57 is first pressed into the bearing housing 55 and retained in place by the snap ring 58. After supporting the inner race of the bearing assembly 57, the shaft member 60 is pressed through the inner race. The drive gear 32 can then be splined onto the shaft member 60 and retained in place by the fastener and washer assembly 65. Removal of the component parts from an assembled bar can be done by accessing the fastener and washer assembly 65 through the hole 67 for disconnecting the drive gear 32 from the shaft member 60 before the rotor assembly 50 is removed from the casing 35. The bearing assembly 57 can be replaced in the opposite manner from the assembly thereof as described above.

The idler gear mounting apparatus 40 permits a stable, substantial mounting for the idler gear 34 while also permitting an ease of serviceability to the bearings 41 and gears 34. The rotor assembly 50 permits the cutterbar 20 to retain a low, thin profile to facilitate the flow of severed crop material over the cutterbar 20. The rotor assembly 50 further also provides a disc cutter assembly 25 that can be easily serviced and permits replacement of any component part thereof.

It will be understood that changes in the details, materials, steps and arrangement of parts which have been described and illustrated to explain the nature of the invention will occur to and may be made by those skilled in the art upon a reading of this disclosure within the principles and scope of the invention. As an example, it will be appreciated by those skilled in the art that the securing member 48 rather than the spacer member 42 may be provided with a recessed portion 45 for receiving the head portion 47 of the bolt 46, which, in this case threadably engages with the spacer member 42 rather than with the securing member 48.

The foregoing detailed description illustrates the preferred embodiment of the invention; however, concepts, as based upon the description may be employed in other embodiments without departing from the scope of the invention. Accordingly, the following claims are intended to protect the invention broadly, as well as in the specific form shown.

## Claims

1. A disc cutterbar (20) for severing standing crop material from the ground and having a plurality of disc cutter assemblies (25) detachably mounted to an upper surface portion (37) of a transmission casing (35):
- said upper surface portion (37) having an opening (53) therein corresponding to each disc cutter assembly (25);
- said transmission casing (35) further also comprising a lower surface portion (38) spaced below the upper surface portion (37) and housing a power transmission gear train (30) including at least one idler gear (34) positioned between adjacent disc cutter assemblies (25); and
- each said disc cutter assembly (25) comprising:
    a) a bearing housing (55) detachably connectable to the upper surface portion (37) of the transmission casing (35) and having a size sufficient to cover the opening (53) corresponding to said disc cutter assembly (25); said bearing housing (55) mounting a bearing assembly (57) having an outer race and an inner race;
    b) a shaft member (60) engaged with the inner race of the bearing assembly (57) and extending through the bearing housing (55); said shaft member (60) being rotatable relative to the bearing housing (55);
    c) a hub (62) affixed to the shaft member (60) and rotatable therewith above the bearing housing (55);
    d) a cutter disc (26) detachably mounted on said hub (62) for rotation therewith; said cutter disc (26) carrying at least one knife (27) to engage and sever standing crop material upon rotation of said cutter disc (26); and
    e) a drive gear (32) connected to the shaft member (60) and positioned within the transmission casing (35) between the upper and lower surface portions (37, 38) thereof; said drive gear (32) forming part of said power transmission gear train (30) and being operatively interengaged with idler gears (34) of said power transmission gear train (30) to effect rotating of the shaft member (60);
characterized in that :
- the outer race of the bearing assembly (57) is removably engaged with the bearing housing (55);
- the shaft member (60) is detachably engaged with the inner race of the bearing assembly (57); and
- the drive gear (32) is detachably connected to the shaft member (60).

2. A disc cutterbar (20) according to claim 1, characterized in that the drive gear (32) is retained on the shaft member (60) by fastener means (65) positioned generally adjacent the lower surface portion (38) of the transmission casing (35).

3. A disc cutterbar (20) according to claim 2, characterized in that the lower surface portion (38) of the transmission casing (35) includes a hole (67) positioned beneath the fastener means (65) to permit access thereto while the corresponding disc cutter assembly (25) is mounted on the transmission casing (35) whereby the drive gear (32) may be disconnected from the shaft member (60) without removing the disc cutter assembly (25) from the transmission casing (35).

4. A disc cutterbar (20) according to claim 3 characterized in that a seal (68) is provided to seal the hole (67) in the lower surface portion (38) of the transmission casing (35) to maintain the fluid tight integrity of said transmission casing (35).

5. A disc cutterbar (20) according to any of the claims 2 to 4 characterized in that the drive gear (32) is splined onto the shaft member (60) and the fastener means (65) is in the form of a fastener and washer assembly operable to detachably connect said drive gear (32) to said shaft member (60).

6. A disc cutterbar (20) according to any of the claims 1 to 5 characterized in that the bearing assembly (57) is retained within the bearing housing (55) by a snap ring (58).

7. A disc cutterbar (20) according to any of the claims 1 to 6 characterized in that the bearing housing (55) is connected to the upper surface portion (37) of the transmission casing (35) by bolts (56) extending through said transmission casing (35) for engagement with the lower surface portion (38) thereof.

Fig. I

Fig. 2

Fig. 3

Fig. 4

**Fig. 5**

**Fig. 6**

EP 0 427 353 A2

Fig. 7